# EUROPEAN PATENT APPLICATION

(11) **EP 4 417 971 A1**
(43) Date of publication of application: **21.08.2024**
(21) Application number: 23156607.6
(22) Date of filing: 14.02.2023
(51) Int. Cl.: G01N 30/60, G01N 30/56

(54) **METHOD FOR LOCKING A FRIT IN A CHROMATOGRAPHY CARTRIDGE AND A CHROMATOGRAPHY CARTRIDGE**

(71) Applicant: Biotage AB, 751 03 Uppsala (SE)
(72) Inventor: ESALA, Juha, 743 93 VATTHOLMA (SE)
(74) Representative: Brann AB

(57) **Abstract**

A method for locking a frit 9 inside a barrel 3 of a chromatography cartridge 1, said method comprising the steps of providing, S1, a frit 9 to an end of a packed bed 7 of chromatography media provided in the barrel 3 and deforming, S2, an inner wall 13 of the barrel 3 from inside the barrel 3 at the position of the frit 9 in the barrel 3 in at least one position with a tool 21 such that a deformation 11 is provided to the inner wall 13 of the barrel 3, which deformation 11 is interacting with the frit 9 to keep it in position. And a chromatography cartridge 1 comprising a barrel 3 in which a packed bed 7 of chromatography media is provided, wherein said chromatography cartridge 1 comprises at least one frit 9 which has been locked in the barrel by this method.

## Description

### Field of the invention

The present invention relates to chromatography, and more particularly to a chromatography cartridge. It further relates to a method for locking a frit in a chromatography cartridge.

### Background of the invention

Chromatography is a chemical separation technique utilizing the fact that substances to be separated are distributed in different ways between a stationary phase and a mobile phase. The stationary phase, or separation medium, which typically is an adsorption medium, an ion-exchanger material, a gel or a surface-modified solid material, is usually packed in a column. Different components in a sample applied to the top of the medium bed will migrate through the column at different rates depending, e.g., on their size and degree of attraction to the stationary phase when the liquid passes through the column. Liquid chromatography is extensively used for chemical analysis as well as for preparative separations in research and industry.

In traditional chromatography, the liquid or solvent passes through the column by gravity. The rate at which the liquid passes through the column is therefore relatively slow. To speed up the rate of the chromatography process, the liquid can be forced through the column by the application of a positive pressure. This may be accomplished by pumping the liquid through the column, such as in HPLC (high performance liquid chromatography), or by the application of a positive air-pressure, such as in flash chromatography. Modern flash chromatography typically uses plastic pre-packed disposable columns or cartridges and in most variants the liquid is pumped through the column or cartridge.

The disposable cartridges used for flash chromatography are usually manufactured with economy in mind, which involves manufacturing the cartridges of inexpensive plastics and designing the columns to be easily assembled by filling the body of the column with the desired packing, usually with frit plugs on each end of the packing to hold the packing in place, and then closing the open end or ends of the columns by end pieces or caps, e.g. by screwing or snapping them to the column ends. The end pieces may also be glued or welded to the column, for example by spin welding or heat plate welding. The modern flash chromatography puts high demands on the cartridges being leak tight and that this property is maintained throughout the process without requiring a delicate handling. Considerable efforts have been made to provide disposable cartridges that are suited for high volume manufacturing at a reasonable cost and yet are sufficiently rigid and leakproof.

Many cartridges for flash chromatography are provided to the end user as a closed pre-packed product. However for certain applications it is desirable to load the sample directly into the column or modify the column. For these purposes so called open cartridges are provided. Typically such cartridges are provided with a screw or snap cap.

A frit is usually provided to each end of a prepacked bed of chromatography media in a barrel of the chromatography cartridge. A cap may be provided to at least one end of the barrel. In open chromatography cartridges this is an openable cap. The other end of the barrel may comprise an end piece or another cap. A hight of a packed bed can usually be made with good precision during packing, however the hight may still differ slightly between different produced products. The cap may be designed to hold the frit against the packed bed during storage and transport. However, if the height of the packed bed differs there may be a gap between the cap and the frit whereby the frit may move slightly during transport and storage. This may cause the packed bed to break up slightly and cause media voiding in the packed bed which is negative for separation performance and precision.

### Summary of the invention

An object of the invention is to provide an improved chromatography cartridge that overcomes the drawbacks of prior art cartridges. A further object of the invention is to provide a method for locking a frit in a barrel of a chromatography cartridge. This is achieved by a method and a chromatography cartridge according to the independent claims.

According to one aspect of the invention a method for locking a frit inside a barrel of a chromatography cartridge is provided, said method comprising the steps of:
- providing a frit to an end of a packed bed of chromatography media provided in the barrel; and
- deforming an inner wall of the barrel from inside the barrel at the position of the frit in the barrel in at least one position with a tool such that a deformation is provided to the inner wall of the barrel, which deformation is interacting with the frit to keep it in position.

According to another aspect of the invention a chromatography cartridge is provided comprising a barrel in which a packed bed of chromatography media is provided, wherein said chromatography cartridge comprises at least one frit which is locked in the barrel by the method according to the invention.

Hereby a method is provided where the frit first is positioned towards the packed bed inside the barrel and then the frit is locked in this position inside the barrel by providing a deformation to an inner wall of the barrel at the position of the frit. Hereby the frit will always be locked in a position in direct connection with the packed bed and there will be no risk for voiding of the packed bed. A tool is inserted into the barrel and is used for deforming the inner wall such that the deformation of the inner wall interacts with the frit to hold it in position. The tool may comprise a sharp object for deforming or punching the inner wall of the barrel. In some embodiments the tool comprises one or more punching pins which can be used for punching the inner wall in order to provide a suitable deformation for interacting with the frit. Hereby the frit is locked inside the barrel by the deformation of the inner wall of the barrel. A chromatography cartridge is also provided having a frit locked inside the barrel by use of this method. This chromatography cartridge is suitably a pre-packed chromatography cartridge whereby the frit can be locked in a position in direct contact with the packed bed whereby voiding of the packed bed can be avoided. A frit which is locked to the barrel in a position in direct connection with the packed bed will limit the problems related to voiding of the packed bed during transport and storage as described above. Hereby improved chromatography cartridges are provided according to the invention.

In one embodiment of the invention said step of deforming an inner wall of the barrel is provided in at least two positions separated around a circumference of the inner wall of the barrel. Hereby the frit is kept secure in correct position. Furthermore, if the deformations are provided simultaneously there is less risk of displacement of the frit caused by the deformation.

In one embodiment of the invention the step of deforming an inner wall of the barrel comprises positioning the tool inside the barrel and forcing at least two punching pins of the tool into the inner wall of the barrel at the position of the frit in order to deform the inner wall in at least two positions at the same time. By performing at least two deformations simultaneously by such a tool there is less risk that the frit is displaced during deformation.

In one embodiment of the invention the method further comprises the steps of retracting the punching pins of the tool from the inner wall of the barrel after the step of forcing the punching pins into the inner wall of the barrel and removing the tool out from the barrel.

In one embodiment of the invention said step of deforming an inner wall of the barrel comprises deforming the inner wall around substantially its whole circumference.

In one embodiment of the invention the barrel is a plastic barrel.

In one embodiment of the invention the chromatography cartridge is prepacked with a packed bed of chromatography media and comprises a cap.

### Brief description of the drawings

Fig. 1a shows schematically in cross section a chromatography cartridge according to one embodiment of the invention.
Fig. 1b illustrates a gap which may be provided between a cap and a frit in a barrel of a chromatography cartridge in which the present invention can be used.
Fig. 2 is a perspective view of a tool which can be used in the present invention.
Fig. 3 is a cross section view of an end of a barrel of a chromatography cartridge and a tool inserted into the barrel.
Fig. 4a shows the same barrel and tool as shown in Fig. 3 where the tool has been activated. Fig 4b shows in detail section A of Fig. 4a where the frit and the inner wall of the barrel are being locked together by the tool.
Fig. 5a shows in cross section an end of a barrel of a chromatography cartridge according to one embodiment of the invention where the frit has been locked to the inner wall of the barrel. Fig. 5b shows in detail section A of Fig. 5a where the frit and the inner wall of the barrel are locked together.
Fig. 6 is a flow chart of a method according to one embodiment of the invention.

### Detailed description

As described in the background section flash chromatography cartridges are typically distributed in a closed pre-packed configuration, although also open cartridges are provided. Open typically meaning that the end user can open a top enclosure of the cartridge and after preparation close the cartridge again. A pre-packed cartridge is typically produced by closing the bottom of the barrel with a bottom cap or an integrated bottom part, mount the interior parts and close with a top cap. Most parts are typically pre-fabricated in automated moulding processes. The production can very simplified be described as a two stage process, wherein in the first stage the plastic parts are fabricated and in the second stage the cartridge is packed and sealed. The second stage is typically more adaptable to various end applications, customer demands etc.

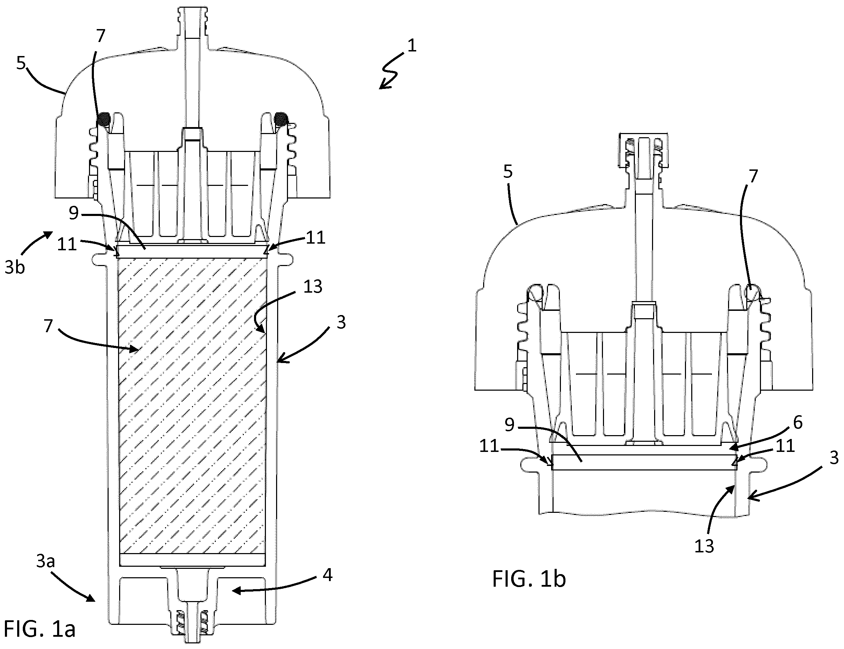

In Figure 1a a chromatography cartridge 1 according to one embodiment of the invention is schematically shown in cross section. The chromatography cartridge 1 comprises a barrel 3, typically a cylindrical, plastic tube, in which a packed bed 7 of chromatography media is provided. The chromatography cartridge further comprises at least one cap 5. In the example as shown in Figure 1a a first end 3a of the barrel 3 comprises a closed outlet end piece 4 and an opposite second end 3b of the barrel 3 comprises an openable cap 5. In this embodiment the cartridge is an open cartridge comprising an openable cap, however the invention could as well be used in a closed cartridge, i.e. the cap 5 does not need to be openable. A frit 9 is provided towards at least one end of the packed bed 7, i.e. between the packed bed 7 and the cap 5. There may be a small gap between the frit 9 and the cap 5 of the chromatography cartridge if a height of the packed bed 7 will differ slightly between different produced products. Such a gap 6 is illustrated in Figure 1b. A gap 6 between the frit 9 and the cap 5 may cause problems of voiding of the packed bed as described above. The cap 5 is designed for reaching inside the barrel 3 of the chromatography cartridge 1 almost all the way to the frit 9. However, the frit 9 is positioned inside the barrel towards an end of the packed bed 7 of chromatography media and if the packed bed 7 is just slightly smaller than normal there may be a gap 6 between the frit 9 and the cap 5 as illustrated in Figure 1b. A sealing 7 in the cap 5 will limit a position of the cap 5, whereby it may be impossible to force the cap 5 all the way towards the frit 9 whereby there may be a gap 6. If the frit 9 then moves somewhat during transport and storage there may be a problem with voiding in the packed bed 7. Hereby, there is a need to lock the frit 9 inside the barrel 3 such that the frit 9 always is provided in close connection with the packed bed 7. The present invention relates to a method for locking a frit 9 inside a barrel 3 of a chromatography cartridge 1 and to a chromatography cartridge comprising a frit 9 which has been locked inside the barrel 3 by such a method.

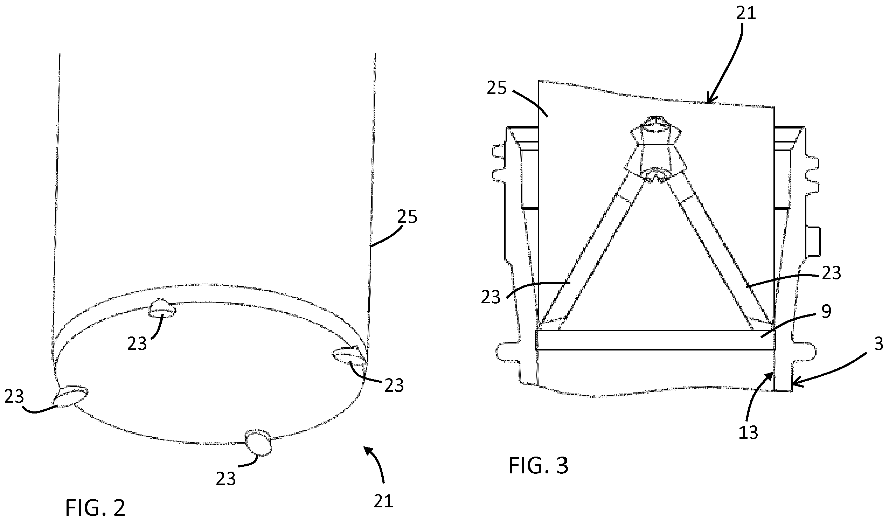

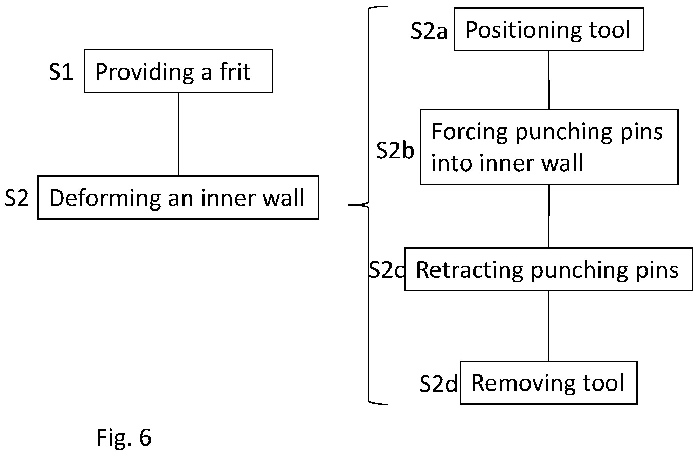

According to the invention a method for locking a frit 9 inside a barrel 3 of a chromatography cartridge 1 is provided. One embodiment of the method is illustrated in a flow chart in Figure 6 and the method steps of this embodiment are described in order below:
S1: Providing a frit 9 to an end of a packed bed 7 of chromatography media provided in the barrel 3. Hereby chromatography media has first been packed into a packed bed 7 inside the barrel 3. The packed bed 7 is provided between the first end 3a of the barrel and the second end 3b of the barrel. The frit 9 is positioned in direct contact with one end of the packed bed 7. In the example of Figure 1a the frit 9 is provided to the end of the packed bed 7 which is provided closest to the second end 3b of the barrel 3. Another frit may also be provided to the other end of the packed bed 7, i.e. the end closest to the first end 3a of the barrel. However, if the first end 3a comprises a closed outlet end piece 4 as in the example of Figure 1a the risk for a gap and movement of the frit would not be the same. Locking of the frit according to the method of the invention may however still be used also for this frit.
S2: Deforming an inner wall 13 of the barrel 3 from inside the barrel 3 at the position of the frit 9 in the barrel 3 in at least one position with a tool 21 such that a deformation 11 is provided to the inner wall 13 of the barrel 3, which deformation 11 is interacting with the frit 9 to keep it in position. The tool 21 may comprise a sharp edge for deforming or punching the inner wall of the barrel 3. The barrel 3 is often made from a plastic material whereby such a deformation by a sharp object is possible. By this deformation or punching, a layer or wedge or part of the inner wall is partly separated from the inner wall but not completely. This part of the inner wall will interact with the frit to hold the frit in position. One embodiment of a tool 21 which can be used is illustrated in Figures 2, 3 and 4, however other tools are also possible to use. The step of deforming the inner wall 13 of the barrel 3 may be provided in at least two positions separated around a circumference of the inner wall 13 of the barrel 3. In one embodiment the inner wall 13 is deformed in at least three or at least four positions around the circumference. These positions may be distributed evenly around the circumference. In some embodiments the deformations at different positions are performed at the same time. Hereby a risk that the frit is displaced during deforming is decreased. A tool 21 which can be used for such simultaneous deformation is shown in Figures 2, 3 and 4. However, in other embodiments the deformations can be made by another type of tool in a sequence after each other. The step of deforming, S2, comprises in one embodiment the step of positioning, S2a, the tool 21 inside the barrel 3 and the step of forcing, S2b, one or more punching pins 23 of the tool 21 into the inner wall 13 of the barrel 3 at the position of the frit 9 in order to deform the inner wall 13 in at least two positions. This can be done at the same time or sequentially depending on how the tool is designed. The method may further comprise the steps of retracting, S2c, the punching pins from the inner wall 13 and removing, S2d, the tool from the barrel 3.

In another embodiment said step of deforming S2 an inner wall 13 of the barrel 3 comprises deforming the inner wall around substantially its whole circumference. This can for example be done by encircling a sharp-edged tool or rotating a wheel having a sharp edge around the inner circumference of the barrel 3 at the position of the frit 9 such that the inner wall 13 of the barrel 3 is deformed around its circumference (or substantially the whole circumference, i.e. leaving less than for example 1/3 of the circumference unaffected would probably not affect the function negatively). This circular deformation is hereby interacting with the frit 9 to keep it in position within the barrel 3.

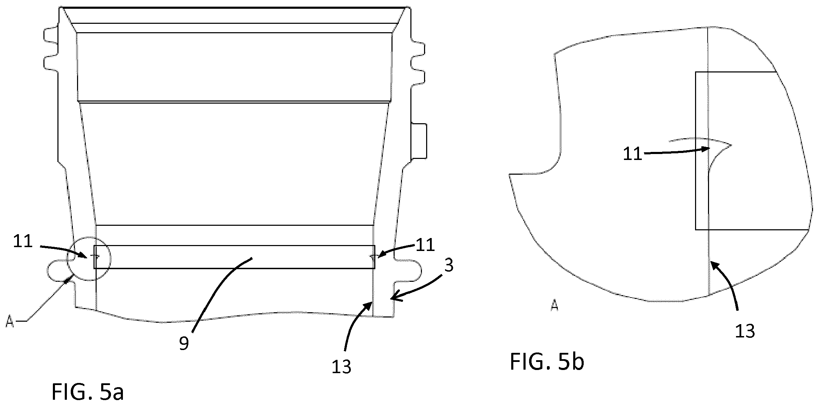

According to the invention a chromatography cartridge 1 is also provided. As described above in relation to the embodiment as shown in Figures 1a and 1b, the chromatography cartridge comprises a barrel 3 in which a packed bed 7 of chromatography media is provided. The chromatography cartridge 1 comprises at least one frit 9 which is locked in a position inside the barrel 3 by a deformation 11 of the inner wall 13 of the barrel 3. The deformation 11 has been provided to the inner wall 13 of the barrel 3 from inside the barrel after the frit 9 has been positioned in the barrel 3. Such deformations 11 are illustrated schematically in Figures 1, 4 and 5. In Figure 5a a barrel 3 of a chromatography cartridge comprising a frit 9 which has been locked inside the barrel 3 according to one embodiment of the invention is shown. In Figure 5b the deformation 11 of the inner wall 13 which is interacting with the frit 9 for locking the frit 9 in the barrel 3 is shown in more detail. A tool 21 may be used for scratching or punching the inner wall 13 to provide such a deformation 11 after the frit 9 has been positioned as described above.
A chromatography cartridge 1 comprising at least one frit 9 which is locked in the barrel 3 by the method according to the invention is also provided according to the invention. The barrel 3 may be a plastic barrel. The chromatography cartridge may be a flash chromatography cartridge and it may be a disposable chromatography cartridge. The chromatography cartridge 1 may be a prepacked chromatography cartridge with a packed bed 7 of chromatography media and it may comprise a cap 5.

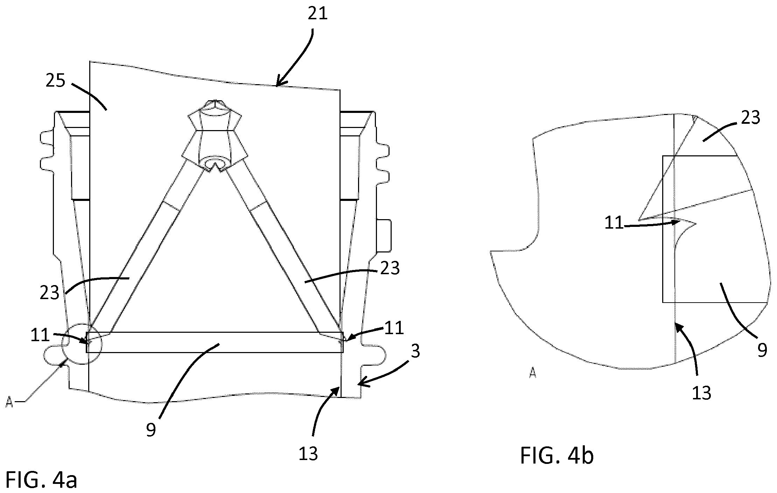

One embodiment of a tool 21 which can be used for providing the deformations 11 according to the invention will now be described with reference to Figures 2, 3 and 4. This is just one example of a tool 21 and other tools may also be used in this invention. In Figure 2 a perspective view of the tool 21 is shown. The tool 21 comprises in this embodiment a central body 25, which in this embodiment is a cylindrical central body 25 dimensioned to fit snuggly inside the barrel 3 of the chromatography cartridge 1 in which the frit 9 should be locked. The tool 21 comprises further according to this embodiment but not necessarily, at least two punching pins 23, wherein said punching pins 23 can be positioned in at least a first and a second position, where the first position is an inactive position where the punching pins 23 are positioned within the central body 25 and the second position is an active position, wherein said punching pins 23 in said second position are extended from the central body 25 of the tool 21 such that they can punch an inner wall 13 of the barrel 3 when the central body 25 of the tool 21 is positioned inside the barrel 3 for locking the frit 9 inside the barrel 3. In Figure 2 the punching pins 23 are in said second position, i.e. extended from the central body 25. In Figure 3 the punching pins 23 are in the first position, i.e. within the central body 25. In Figure 3 the tool 21 is positioned within the barrel 3, ready for deforming the inner wall 13 of the barrel 3 for locking the frit 9 to the barrel 3. In Figure 4a the punching pins 23 are in said second position, i.e. extended. In the second position the punching pins 23 are punching or deforming the inner wall 13 of the barrel 3. This can be seen in more detail in Figure 4b. After the deformation of the inner wall the punching pins 23 are retracted, i.e. moved to the first position again. And thereafter the tool 21 is removed from the barrel 3.

## Claims

1. A method for locking a frit (9) inside a barrel (3) of a chromatography cartridge (1), said method comprising the steps of:
- providing (S1) a frit (9) to an end of a packed bed (7) of chromatography media provided in the barrel (3); and
- deforming (S2) an inner wall (13) of the barrel (3) from inside the barrel (3) at the position of the frit (9) in the barrel (3) in at least one position with a tool (21) such that a deformation (11) is provided to the inner wall (13) of the barrel (3), which deformation (11) is interacting with the frit (9) to keep it in position.

2. Method according to claim 1, wherein said step of deforming (S2) an inner wall (13) of the barrel (3) is provided in at least two positions separated around a circumference of the inner wall (13) of the barrel (3).

3. Method according to any one of the preceding claims, wherein the step of deforming (S2) an inner wall (13) of the barrel (3) comprises positioning (S2a) the tool (21) inside the barrel (3) and forcing (S2b) at least two punching pins (23) of the tool (21) into the inner wall (13) of the barrel (3) at the position of the frit (9) in order to deform the inner wall (13) in at least two positions at the same time.

4. Method according to claim 3, wherein the method further comprises the steps of retracting (S2c) the punching pins (23) of the tool (21) from the inner wall (13) of the barrel (3) after the step of forcing the punching pins into the inner wall (13) of the barrel (3) and removing (S2d) the tool (21) out from the barrel (3).

5. Method according to claim 1, wherein said step of deforming (S2) an inner wall (13) of the barrel (3) comprises deforming the inner wall around substantially its whole circumference.

6. A chromatography cartridge (1) comprising a barrel (3) in which a packed bed (7) of chromatography media is provided, wherein said chromatography cartridge (1) comprises at least one frit (9) which is locked in the barrel (3) by a method according to any one of the preceding claims.

7. Chromatography cartridge according to claim 6, wherein the barrel (3) is a plastic barrel.

8. Chromatography cartridge according to any one of the claims 6-7, wherein the chromatography cartridge (1) is prepacked with a packed bed (7) of chromatography media and comprises a cap (5).

9. A chromatography cartridge (1) comprising a barrel (3) in which a packed bed (7) of chromatography media is provided, wherein said chromatography cartridge (1) comprises at least one frit (9) which is locked in a position inside the barrel (3) by a deformation (11) of the inner wall (13) of the barrel (3), wherein said deformation (11) has been provided to the inner wall (13) of the barrel (3) from inside the barrel after the frit (9) has been positioned in the barrel (3).
